(19) Europäisches Patentamt / European Patent Office / Office européen des brevets

(11) **EP 2 098 450 B1**

(12) **FASCICULE DE BREVET EUROPEEN**

(45) Date de publication et mention
de la délivrance du brevet:
**25.08.2010 Bulletin 2010/34**

(51) Int Cl.:
***B64D 15/16*** *(2006.01)*

(21) Numéro de dépôt: **09290147.9**

(22) Date de dépôt: **02.03.2009**

(54) **Système et procédé d'antigivrage/dégivrage et structure d'aéronef incorporant ce système**

System und Verfahren zum Schutz vor Vereisung oder zur Enteisung und Flugzeugstruktur, die ein solches System umfasst

Anti-icing/de-icing system and method and aircraft structure comprising this system

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **05.03.2008 FR 0801202**

(43) Date de publication de la demande:
**09.09.2009 Bulletin 2009/37**

(73) Titulaire: **Hutchinson
75008 Paris (FR)**

(72) Inventeurs:
 • **Tenebre, Pauline
 77810 Thomery (FR)**
 • **Six, Marc-François
 45120 Corquilleroy (FR)**

(74) Mandataire: **Bolinches, Michel Jean-Marie et al
Cabinet Orès
36, rue de St Pétersbourg
75008 Paris (FR)**

(56) Documents cités:
 **WO-A-00/68047         DE-A1- 19 826 168
 DE-A1-102006 009 480**

 • **VENNA S V ET AL: "PIEZOELECTRIC
 TRANSDUCER ACTUATED LEADING EDGE DE-
 ICING WITH SIMULTANEOUS SHEAR AND
 IMPULSE FORCES" JOURNAL OF AIRCRAFT,
 AIAA, RESTON, VA, US, vol. 44, no. 2, 1 mars 2007
 (2007-03-01), pages 509-515, XP001540539 ISSN:
 0021-8669**

**EP 2 098 450 B1**

**Description**

La présente invention concerne un système d'antigivrage/dégivrage par des ondes ultrasonores d'une surface externe d'une structure susceptible d'être givrée, telle qu'une voilure ou une nacelle d'aéronef, une telle structure incorporant ce système et un procédé d'antigivrage/ dégivrage mis en oeuvre par ce système.

Il est connu d'utiliser les ondes ultrasonores pour le dégivrage d'ailes d'avions, de pales d'hélicoptères ou de nacelles de moteurs d'aéronefs notamment. Le document DE-A-10 2004 060 675 présente un dispositif et un procédé utilisant des transducteurs piézoélectriques agencés derrière le bord d'attaque d'une aile d'avion pour réaliser le dégivrage de cette dernière, avec une fréquence de travail choisie en fonction de la rigidité de la structure de cette aile.

Il est également connu par le document WO-A-2007/095935 d'utiliser un réseau bidimensionnel de transducteurs intégrés à l'intérieur d'une aile d'avion qui émettent des ultrasons pour mesurer, via un balayage de la surface glacée de l'aile et la détection des ondes ultrasonores réfléchies par les bords de cette surface, l'épaisseur de la couche de glace recouvrant cette aile. Un dispositif similaire est également connu du document DE 19826168.

Un inconvénient majeur des systèmes connus de dégivrage de ces structures d'aéronef réside notamment dans la consommation d'énergie non optimisée qui est requise pour prévenir du givrage et/ou dégivrer de manière satisfaisante à chaque instant toutes les zones concernées de la surface externe de ces structures.

Un but de la présente invention est de proposer un système d'antigivrage par des ondes ultrasonores d'une surface externe d'une structure susceptible d'être givrée, telle qu'une voilure ou une nacelle d'aéronef, ce système comprenant une pluralité de transducteurs piézoélectriques équipant la structure en regard de cette surface, système qui remédie à cet inconvénient.

A cet effet, un système d'antigivrage selon l'invention comprend des moyens de balayage d'au moins une matrice de mailles élémentaires prédéfinie dans cette surface externe en relation avec un agencement régulier d'un groupe de ces transducteurs, ces moyens de balayage étant aptes à focaliser les ondes émises par tout ou partie des transducteurs du ou de chaque groupe sur ces mailles les unes à la suite des autres, par l'intermédiaire de moyens de sommation de signaux couplés à ces moyens de balayage et aptes à réaliser pour chaque maille une sommation des signaux issus des transducteurs émettant ces ondes.

On notera que ces moyens de sommation et de balayage de la ou de chaque matrice de mailles élémentaires permettent de prémunir du givre et/ou de dégivrer efficacement cette structure, avec une consommation d'énergie réduite d'une manière significative en comparaison des systèmes d'antigivrage/ dégivrage existants.

Avantageusement, le système d'antigivrage selon l'invention peut comprendre un réseau formé d'une pluralité de ces matrices comprenant chacune une multitude des mailles, par exemple présentes selon un nombre compris entre 500 et 5000 par matrice.

Selon une autre caractéristique de l'invention, ces moyens de sommation peuvent être aptes à recalculer à chaque instant la longueur d'onde et la phase de chaque signal émis par chaque transducteur du ou de chaque groupe à l'intérieur de la ou de chaque matrice associée, de sorte que ces moyens de balayage focalisent de manière synchronisée sur chaque maille la somme des ondes émises avec une amplitude maximale pour l'onde résultante.

Selon une autre caractéristique de l'invention, lesdits transducteurs peuvent être avantageusement montés sur une face ou « peau » interne de ladite structure qui est opposée à ladite surface externe. En variante, ils pourraient être intégrés dans cette structure, à l'intérieur d'un logement dédié de celle-ci.

Selon un exemple préférentiel de réalisation de l'invention, le ou chaque groupe de transducteurs associé à la ou chaque matrice de mailles comprend deux séries de transducteurs respectivement agencées en vis-à-vis et en regard de deux bords périphériques parallèles de ladite surface externe qui sont extérieurs à la matrice correspondante.

Optionnellement selon cet exemple de l'invention, chacune desdites séries de transducteurs peut comprendre une pluralité de couples de transducteurs régulièrement espacés dans une direction de la matrice correspondante, l'un des deux transducteurs de chaque couple étant conçu pour remplacer l'autre transducteur en cas de défaillance de ce dernier.

Selon une autre caractéristique de l'invention, chaque transducteur du ou de chaque groupe est avantageusement alimenté par un générateur électrique au moyen de câbles pouvant être logés dans ladite structure, et est connecté à une mémoire couplée à un calculateur conçu pour calculer les paramètres de l'onde à envoyer vers chaque maille, l'ensemble des transducteurs étant relié à un même dispositif de gestion électronique apte à commander ces moyens de balayage selon des séquences de balayage déterminées.

De préférence, le système selon l'invention comprend au moins un dispositif de mesure de la température de ladite surface externe qui est couplé audit dispositif de gestion, pour définir les ondes utilisées dans chaque séquence de balayage.

Egalement à titre préférentiel, le système selon l'invention comprend en outre des moyens d'amortissement acoustique qui sont au moins aptes à éviter la propagation desdites ondes émises de l'une des matrices aux autres matrices adjacentes. Ces moyens d'amortissement peuvent avantageusement comprendre des bandes d'amortissement de séparation entre les matrices qui sont de préférence chacune à base d'un élastomère viscoélastique, tel que le « Deltane », et qui sont respectivement agencées en regard de frontières entre les matrices, entre une face interne de ladite structure opposée à ladite surface externe et une plaque support de préférence métallique.

A titre encore plus préférentiel, ces moyens d'amortissement peuvent comprendre en outre des bordures d'amortissement qui sont de préférence chacune à base d'un élastomère viscoélastique, tel que le « Deltane », et qui sont agencées en regard d'une zone périphérique de ladite surface externe entourant à la fois la ou chaque matrice et les transducteurs associés, ces bordures d'amortissement étant aptes à éviter la réflexion par effet de bord desdites ondes émises dans chaque matrice.

Selon un mode de réalisation de l'invention, le ou chaque groupe de transducteurs peut avantageusement comprendre des transducteurs réversibles qui sont successivement aptes à émettre et à recevoir lesdites ondes, en particulier pour détecter par retournement temporel la présence de zones glacées sur la ou chaque matrice.

Le système d'antigivrage selon l'invention peut également être utilisé comme système de dégivrage, étant alors également apte à dégivrer successivement lesdites zones glacées après détection de celles-ci par retournement temporel, au moins l'un des transducteurs fonctionnant en tant qu'émetteur et les autres en tant que récepteur, ce système comprenant des moyens de stockage des signaux émis couplés à des moyens de compression et d'inversion des signaux stockés, lesdits moyens de balayage étant aptes à refocaliser ces signaux inversés et comprimés vers lesdites zones glacées.

De manière générale, chacun des transducteurs utilisés dans le système d'antigivrage/ dégivrage selon l'invention peut être avantageusement un transducteur piézoélectrique multicouches à base d'un matériau céramique.

Une structure d'aéronef selon l'invention, susceptible d'être givrée sur sa surface externe et telle qu'une surface de voilure ou de nacelle, est **caractérisée en ce qu'**elle intègre un système d'antigivrage tel que défini ci-dessus.

Selon un exemple de l'invention où cette structure d'aéronef forme une aile d'avion, chaque groupe de transducteurs associé à la ou chaque matrice peut avantageusement comprendre deux séries de transducteurs respectivement agencées côtés extrados et intrados en regard de deux bords périphériques parallèles de ladite surface externe qui sont extérieurs à cette matrice, les transducteurs de chaque série étant régulièrement espacés dans une direction longitudinale de la structure et étant couplés à deux collecteurs d'alimentation électrique respectivement extrados et intrados.

Selon l'invention, le procédé d'antigivrage par des ondes ultrasonores d'une surface externe d'une structure susceptible d'être givrée, telle qu'une voilure ou une nacelle d'aéronef, ce procédé utilisant une pluralité de transducteurs piézoélectriques équipant la structure de manière adjacente à cette surface, est tel qu'il comprend essentiellement :

- une émission d'ondes progressives, dans au moins une matrice de mailles élémentaires prédéfinie dans cette surface externe en relation avec un agencement régulier d'un groupe de ces transducteurs, par tout ou partie de ces derniers,
- une sommation, pour chaque maille de cette matrice, de signaux issus des transducteurs émettant ces ondes et représentatifs de celles-ci, et
- au moins un balayage de cette matrice, pour focaliser les ondes progressives résultantes émises sur ces mailles les unes à la suite des autres.

En d'autres termes, on prémunit du givre chacune des mailles de la ou de chaque matrice les unes à la suite des autres, en envoyant de façon synchronisée par le biais du groupe associé de transducteurs des ondes progressives d'amplitude plus faible mais dont la longueur d'onde et la phase sont recalculées à chaque instant pour provoquer un maximum d'énergie sur la maille (i, j) à l'instant t puis sur la maille (i+1, j+1) à l'instant t+1, etc. Ce mode de fonctionnement est avantageusement moins consommateur d'énergie.

Selon une autre caractéristique de l'invention, l'on peut réaliser chaque balayage de la ou chaque matrice de manière synchronisée en recalculant à chaque instant la longueur d'onde et la phase desdits signaux pour maximiser l'énergie vibratoire sur chaque maille avec une amplitude total maximale pour le signal résultant, correspondant de préférence à un déplacement généré sur ces mailles égal ou supérieur à 1 $\mu$m.

Avantageusement, l'on peut choisir les dimensions de la ou chaque matrice et le nombre des transducteurs au sein de chaque groupe associé en fonction de la période de balayage maximale souhaitée.

De préférence, les transducteurs émettent des paquets d'ondes focalisés sur chaque maille de la ou chaque matrice à traiter, dont les fréquences sont par exemple comprises entre 100 kHz et 5 MHz. Chaque transducteur utilisé peut avantageusement présenter une épaisseur, mesurée selon l'épaisseur de la structure, qui est de l'ordre d'une demi-longueur d'onde ultrasonore.

Egalement à titre préférentiel, on mesure la température de ladite surface externe pour choisir les ondes de la séquence de balayage pour chaque transducteur.

De préférence, on amortit entre les matrices deux à deux adjacentes les ondes émises dans l'une d'entre elles pour éviter leur propagation à la matrice adjacente et/ou l'on amortit les ondes émises dans chaque matrice pour éviter la réflexion par effet de bord, autour de cette matrice et des transducteurs correspondants.

En variante, on peut au contraire utiliser la réflexion par effet de bord, autour de chaque matrice et des transducteurs correspondants, pour générer des ondes stationnaires.

Comme indiqué précédemment, on peut avantageusement prévoir des couples de transducteurs régulièrement espacés dans une direction de chaque matrice, l'un des transducteurs de chaque couple étant utilisé pour remplacer l'autre transducteur en cas de défaillance de ce dernier. Dans ce cadre, l'on réalise avantageusement des tests avant de mettre en service l'antigivrage (par exemple avant chaque décollage de l'avion dans le cas d'une aile d'avion à protéger du givre), ces tests consistant à :

- émettre un signal avec un transducteur émetteur à tester $X_t$ inclus dans un couple de transducteurs ($X_t$, $Y_t$) associé à la ou à chaque matrice, tous les autres transducteurs $X_k$ (k différent de t) du groupe correspondant étant utilisés en mode récepteur et, dans ce cas, à
- examiner si au moins l'un de ces transducteurs $X_k$ en mode récepteur ne reçoit pas ce signal, de préférence en utilisant la technique de retournement temporel pour affiner la localisation de la source émettrice par les transducteurs en mode récepteur, et
- faire basculer la mise en oeuvre de l'antigivrage sur l'autre transducteur émetteur $Y_t$ pour cause de défaillance du transducteur $X_t$.

Selon une autre caractéristique de l'invention, l'on peut mettre également en oeuvre un dégivrage de ladite surface externe par la technique de retournement temporel, pour la ou chaque matrice de mailles :

- en faisant émettre une onde à au moins un transducteur utilisé en mode émetteur associé à cette matrice, cette onde rencontrant une singularité provoquée par un point de formation de glace sur cette matrice,
- en captant, par tout ou partie des autres transducteurs associés à cette même matrice et utilisés en mode récepteur, le signal représentatif de cette onde ayant rencontré cette singularité, et en stockant ce signal dans une mémoire interne, et
- en inversant et en comprimant ce signal pour refocaliser l'onde correspondant à ce signal inversé et comprimé vers ladite singularité,

pour dégivrer successivement les points de glace au fur et à mesure de leur formation, suite à leur localisation.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :

la figure 1 est une vue schématique partielle d'une structure de voilure d'aéronef illustrant à titre exemplatif une zone de la surface externe de cette structure à prémunir du givrage ou à dégivrer,
la figure 2 est une vue développée en plan de la structure de la figure 1 illustrant en outre un agencement selon l'invention de deux séries de transducteurs piézoélectriques de part et d'autre et le long de cette zone,
la figure 3 est une vue schématique partielle de profil de la structure des figures 1 et 2, montrant notamment le montage selon l'invention de ces transducteurs sur une face interne de la structure,
la figure 4 est un schéma à blocs simplifié montrant les couplages fonctionnels entre les éléments constitutifs essentiels du système d'antigivrage/ dégivrage selon l'invention, pour chacun des transducteurs,
la figure 5 est une vue schématique partielle développée, à l'instar de la figure 2, de ladite zone à prémunir du givrage ou à dégivrer, montrant son découpage selon l'invention en des matrices de mailles élémentaires associées chacune à un groupe de transducteurs,
la figure 6 est une vue schématique illustrant, pour l'une des matrices de la figure 5, la focalisation sur chaque maille d'ondes émises selon l'invention par les transducteurs du groupe associé,
la figure 7 est une vue schématique illustrant, pour l'une des matrices de la figure 5, le fonctionnement du système d'antigivrage selon l'invention en mode de dégivrage, par la technique du retournement temporel,
la figure 8 est une vue schématique illustrant, pour l'une des matrices de la figure 5, le fonctionnement du système d'antigivrage selon l'invention en mode de redondance via des couples de transducteurs, et
la figure 9 est une vue schématique partielle en coupe de la structure pourvue du système selon l'invention, selon le plan IX-IX de la figure 1, montrant le montage sur une face interne de cette structure de moyens d'amortissement acoustique des ondes émises d'une matrice à une autre.

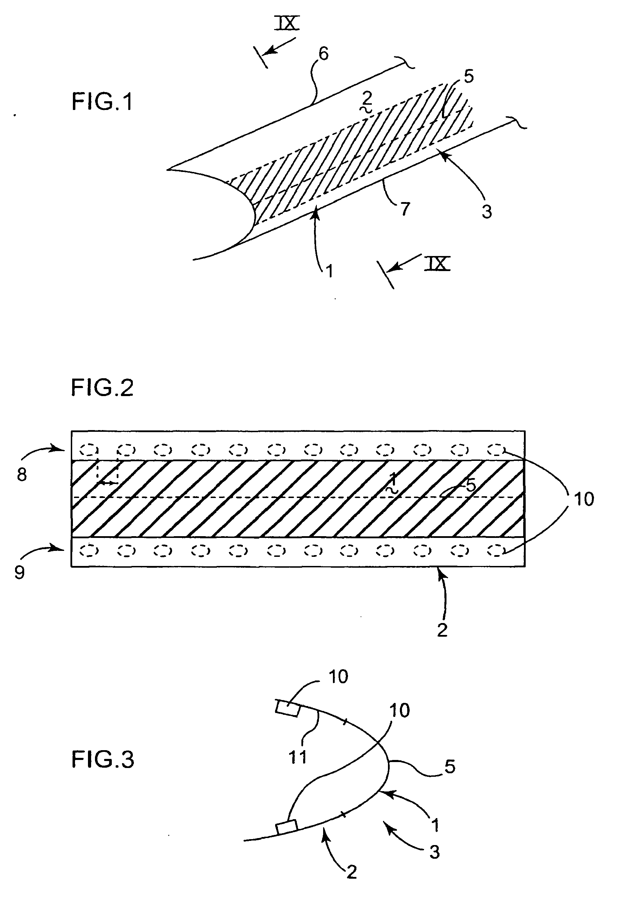

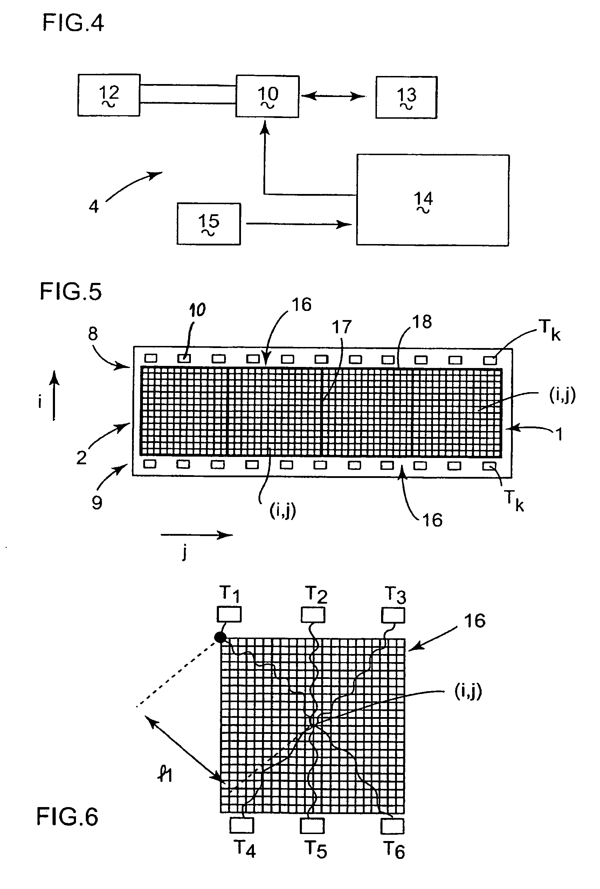

La figure 1 montre un exemple typique de géométrie de zone 1 à prémunir du givrage ou à dégivrer sur une surface externe 2 de structure d'aéronef 3, telle qu'une aile d'avion ou une pale d'hélicoptère, grâce au système d'antigivrage/ dégivrage 4 selon l'invention (schématisé à la figure 4). Cette zone 1 admet comme axe longitudinal de symétrie la ligne de bord d'attaque 5 de l'aile ou de la pale et s'étend de part et d'autre de cet axe sur l'extrados 6 et l'intrados 7 de l'aile, par exemple.

Les figures 2 et 3 montrent l'agencement préférentiel selon l'invention de deux séries 8 et 9 de transducteurs piézoélectriques 10 réversibles (i.e. aptes à fonctionner seulement en mode émetteur, en mode antigivrage, ou en outre en mode récepteur, en mode dégivrage) de part et d'autre de cette zone 1 et sur la face interne 11 de la structure 3 opposée à sa surface externe 2 à traiter. Chaque transducteur 10 est conçu pour présenter des dimensions minimales, avec une épaisseur de l'ordre d'une demi-longueur d'onde ultrasonore, et il est de préférence de type multicouches à base de matériaux céramiques.

Ces deux séries 8 et 9 de transducteurs sont ainsi agencées symétriquement l'une de l'autre par rapport à la ligne de bord d'attaque 5, dans cet exemple suivant la direction longitudinale de la structure 3. Les transducteurs 10 d'une même série 8, 9 sont séparés deux à deux par exemple de 20 cm et sont alimentés par des câbles d'alimentation électrique (non illustrés) situés à l'intérieur de la structure 3 (dans la partie inférieure de l'aile d'avion ou de la pale d'hélicoptère, par exemple). En fonction de la taille de la structure 3 et donc du nombre de transducteurs 10, on peut envisager d'utiliser un collecteur d'alimentation intrados et un collecteur extrados (non visibles).

Comme illustré à la figure 4, chaque transducteur 10 est essentiellement relié, d'une part, à un générateur électrique 12 via les câbles précités et, d'autre part, à une mémoire indépendante 13 couplée à des algorithmes de calculs aptes à calculer la nature de l'onde à émettre (cette mémoire indépendante 13 est utilisée pour mettre en oeuvre la technique du retournement temporel qui sera décrite ci-après). Par ailleurs, les transducteurs 10 sont tous reliés à un dispositif de gestion électronique commune 14 apte à commander des moyens de balayage permettant de focaliser, via des moyens de sommation de signaux couplés à ces moyens de balayage, les ondes émises par les transducteurs 10 sur des mailles élémentaires (i, j) prédéfinies dans la zone 1 à traiter (voir les figures 5 et 6).

Par ailleurs, le système 4 selon l'invention inclut en outre avantageusement un ou plusieurs dispositifs de mesure de la température 15 de la surface externe 2, du fait que la température influe sur la propagation des ondes dans le matériau. Les températures mesurées par ce(s) dispositif(s) 15 peuvent ainsi constituer des données d'entrée pour choisir les ondes de la séquence de balayage pour chaque transducteur 10.

Comme illustré à la figure 5, on divise dans un premier temps la zone 1 à traiter en au moins une matrice 16 de mailles élémentaires (i, j) (seulement au nombre de quatre matrices 16 dans l'exemple non limitatif de cette figure, sachant que l'on pourrait prévoir plus ou moins de matrice 16), une maille étant ainsi repérée par ses coordonnées (i, j) avec i entier allant de 1 à n et j entier allant de 1 à m. Dans le cas d'une aile d'avion ou d'une pale d'hélicoptère, cette zone 1 peut par exemple présenter une largeur de l'ordre de 20 cm, et une longueur pouvant atteindre plusieurs mètres. On subdivise ainsi virtuellement la ou chaque matrice 16 en mailles (i, j) de faible superficie (par exemple 1 cm$^2$) au regard de celle de la structure 3. Si l'on note n le nombre de colonnes et m le nombre de lignes, les n colonnes s'entendent dans la direction transversale au bord d'attaque 5 et les m lignes dans la direction parallèle à ce bord 5.

Les n x m mailles (i, j) sont ainsi avantageusement regroupées par matrices 16 dans la direction longitudinale, chaque matrice 16 étant formée en vis-à-vis d'un groupe des transducteurs piézoélectriques 10, lequel est subdivisé en une partie de chacune des deux séries 8 et 9 précitées. Par exemple, chaque matrice 16 pourra comporter 1200 mailles (20 dans la direction transversale, soit sur une largeur de 20 cm, et 60 dans la direction longitudinale, soit sur une largeur de 60 cm). Ainsi, telle ou telle matrice 16 de la zone 1 à traiter ne sera prémunie du givre que par le biais des transducteurs 10 agencés directement en vis-à-vis de cette matrice 16, et les matrices 16 de mailles (i, j) seront donc traitées de façon indépendante par le système d'antigivrage/ dégivrage 4 selon l'invention.

Comme visible à la figure 6, où la ou chaque matrice 16 est située dans le champ d'action de x transducteurs $T_1$ à $T_6$ (au nombre de six dans cette exemple non limitatif, soit trois transducteurs $T_1$ à $T_3$ du coté extrados et trois autres $T_4$ à $T_6$ du côté intrados), les moyens de balayage précités permettent de mettre en oeuvre des séquences de balayage de la ou chaque matrice 16 de mailles (i, j) en mode d'antigivrage, en focalisant les ondes émises par les transducteurs $T_1$ à $T_6$ du groupe correspondant sur ces mailles (i, j) les unes à la suite des autres, via lesdits moyens de sommation de signaux couplés qui sont conçus pour réaliser pour chaque maille (i, j) une sommation des signaux issus des transducteurs $T_1$ à $T_6$ émettant ces ondes. Ces moyens de sommation sont conçus pour recalculer à chaque instant la longueur d'onde et la phase des signaux émis par chaque transducteur $T_1$ à $T_6$ de chaque groupe à l'intérieur de la matrice 16 associée, de sorte que ces moyens de balayage focalisent de manière synchronisée sur chaque maille (i, j) la somme des ondes émises avec une amplitude maximale pour l'onde résultante.

On va à présent décrire plus en détail la mise en oeuvre du procédé d'antigivrage au moyen du système d'antigivrage/ dégivrage 4 selon l'invention utilisé spécifiquement en mode antigivrage, en se plaçant dans une matrice 16 par exemple de 20 x 60 mailles (i, j) soit de 1200 mailles.

Au lieu de prémunir du givre la matrice 16 considérée en envoyant à l'aide de ces transducteurs $T_1$ à $T_6$ des ondes (stationnaires ou progressives) ayant suffisamment d'énergie pour dégivrer à chaque instant la surface correspondante de cette matrice 16 en tout point, on choisit selon la présente invention de prémunir du givre chacune des mailles (i, j) de la matrice 16 les unes à la suite des autres, en envoyant de façon synchronisée par le biais de ces six transducteurs $T_1$ à $T_6$ des ondes d'amplitude plus faible mais dont la longueur d'onde et la phase seront recalculées à chaque instant pour provoquer un maximum d'énergie sur la maille (i, j) à l'instant t puis sur la maille (i+1, j+1) à l'instant t+1, etc. Ce mode de fonctionnement présente notamment l'avantage d'être moins consommateur en énergie.

Par exemple, si l'on souhaite traiter la maille (i, j) par le biais de quatre transducteurs (notés $T_1$ à $T_4$) en envoyant ces ondes, on note :

- $I_k$ la distance entre la maille (i, j) et le transducteur $T_k$ (la distance $I_1$ pour k=1 est représentée à la figure 6);
- $\lambda_k$ la longueur d'onde de l'onde envoyée par le transducteur $T_k$ (fonction de la célérité des ondes dans le matériau considéré, par exemple égale à environ 5000 m/s dans une structure 3 en titane) ; et
- $\phi_k$ la phase de l'onde envoyée par le transducteur $T_k$ et $A_k$ son amplitude maximale.

On se place à l'instant où les amplitudes sont maximales (et toutes en même temps). L'expérience montre que l'amplitude $A_k$ est insuffisante pour garantir l'antigivrage, du fait d'un déplacement généré sur les mailles (i, j) qui est inférieur à un micron. On a :

$$U_k(x, t_o) = A_k \cos(x/\lambda_k + \phi_k)$$

(x étant la distance au transducteur $T_k$).

La condition souhaitée pour être en situation d'antigivrage sur la maille (i, j) est donnée par :

$$[I_k - \phi_k \lambda_k /2\pi] / \lambda_k = E([I_k - \phi_k \lambda_k /2\pi] / \lambda_k)$$

pour tous les k à l'instant $t_o$, où E représente la partie entière.

Sur la maille (i, j), l'amplitude résultante $U_{ij}$ des ondes progressives obtenues vaut donc :

$U_{ij} = \Sigma_k A_k$, amplitude cette fois-ci suffisante pour garantir l'antigivrage grâce au procédé de l'invention.

En fonction de la disposition des transducteurs $T_k$ et des paramètres des ondes injectées pour garantir le non-givrage de la maille (i, j) (amplitude, longueur d'onde, phase), d'autres mailles (i, j) pourront être éventuellement en situation de non-givrage.

On utilise de préférence des paquets d'ondes émis par chaque transducteur $T_k$ et déjà focalisés sur la maille (i, j) à traiter, ce qui permet de dépenser moins d'énergie électrique.

Ainsi, en fonction de la géométrie choisie pour la zone 1 à traiter, des séquences de balayage en antigivrage permettent d'optimiser une période de balayage. Pour donner des ordres de grandeurs, on peut estimer que chaque balayage selon l'invention dure de l'ordre de la milliseconde, la période d'un balayage complet de chaque matrice 16 de mailles (i, j) étant alors inférieure à 1200/1000=1,2 seconde. Comme cette période doit être la plus courte possible pour garantir le bon fonctionnement en antigivrage, les dimensions de chaque matrice 16 et le nombre de transducteurs $T_k$ pourront être dimensionnés en fonction de la période de balayage maximale souhaitée.

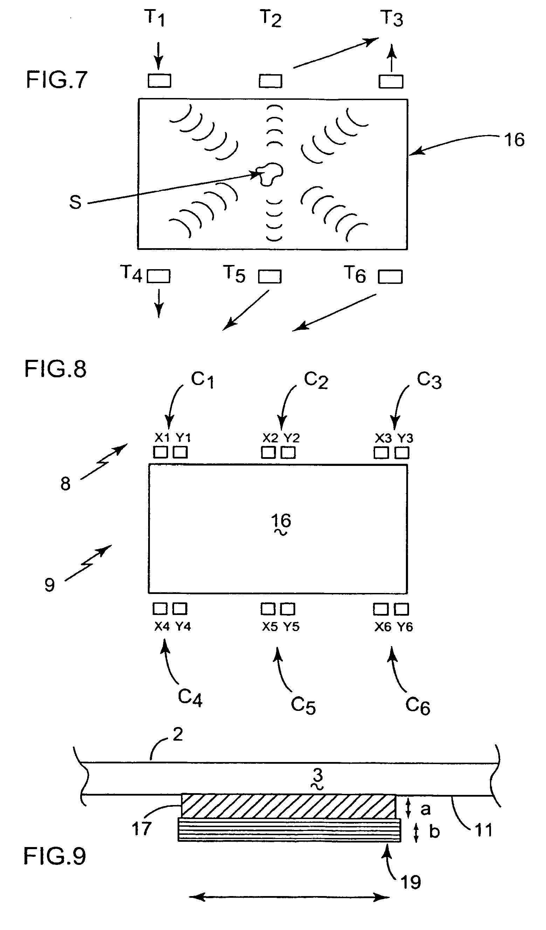

Pour tenir compte de la durée de vie limitée des transducteurs piézo-électriques $T_k$, on peut avantageusement choisir d'utiliser ces transducteurs $T_k$ avec une redondance, comme illustré à la figure 8. Par rapport à l'exemple de réalisation ayant été décrit ci-dessus, chaque transducteur $T_k$ est dans ce cas remplacé par un couple $C_k$ de transducteurs $X_k$ et $Y_k$, dont un seul transducteur fonctionnera (la figure 8 illustre ainsi, en référence à l'exemple de la figure 6, six couples de transducteurs $C_1(X_1, Y_1)$. $C_2(X_2, Y_2)$, $C_3(X_3, Y_3)$, $C_4(X_4, Y_4)$, $C_5(X_5, Y_5)$ et $C_6(X_6, Y_6)$).

Ainsi, avant la mise en service du système 4 selon l'invention (par exemple avant chaque décollage d'avion), on pourra réaliser une phase de test en émettant un signal quelconque avec l'un des transducteurs $X_t$, tous les autres transducteurs $X_k$ (avec k différent de t) étant alors en mode récepteur. Si aucun des transducteurs en mode récepteur ne reçoit de signal, alors le transducteur $X_t$ sera déclaré défaillant et le système 4 selon l'invention basculera pour l'antigivrage sur l'autre transducteur $Y_t$ du couple de transducteurs $C_t$. On pourra utiliser la technique du retournement temporel (détaillé ci-après dans la partie dégivrage) pour affiner la localisation de la source S par les transducteurs en mode récepteur.

Lors de la mise en service et afin de limiter la consommation d'énergie électrique et de préserver la durée de vie des transducteurs $T_k$, on peut avantageusement choisir de n'enclencher le système 4 selon l'invention qu'en condition givrante. On peut utiliser à cet effet ce système 4 en mode de détection en utilisant un nombre réduit de transducteurs $T_k$ et/ou des transducteurs dédiés (générant une énergie plus faible) qui fonctionneront selon la technique du retournement temporel. Des tests réguliers de présence de glace pourront ainsi être effectués. L'intérêt de surveiller la présence de glace avec un réseau dédié est de préserver la durée de vie des transducteurs $T_k$ d'antigivrage.

Comme illustré aux figures 5 et 9, les matrices 16 de mailles (i, j) adjacentes sont avantageusement séparées entre elles par des moyens d'amortissement acoustique 17, 18 qui sont au moins aptes à éviter la propagation des ondes d'une matrice 16 à une autre et qui comprennent des bandes d'amortissement 17 à base d'un élastomère viscoélastique, tel que le « Deltane ». Ces bandes d'amortissement 17 sont respectivement agencées en regard de frontières entre les matrices 16, entre la face interne 11 de la structure 3 opposée à la surface externe 2 à traiter et une plaque support 19 métallique, par exemple en titane. Pour une structure de 2,5 mm d'épaisseur, l'épaisseur a de chaque bande d'amortissement 17 en « Deltane » est par exemple de 0,5 mm et l'épaisseur b de la plaque support 19 en titane est par exemple de 0,5 mm également. De cette manière, les matrices 16 sont gérées de manière indépendante les unes des autres lors de la mise en oeuvre de l'antigivrage ou du givrage selon l'invention.

De préférence, ces moyens d'amortissement 17, 18 comprennent en outre des bordures 18 (visibles à la figure 5) qui sont également à base d'un élastomère viscoélastique tel que le « Deltane », et qui sont agencées en regard d'une zone périphérique de la zone 1 à traiter entourant à la fois les matrices 16 et les transducteurs 10, ces bordures d'amortissement 18 étant conçues pour éviter la réflexion par effet de bord des ondes émises dans chaque matrice 16. On peut ainsi simplifier la gestion des ondes d'antigivrage au sein de chaque matrice 16.

En variante, on pourrait au contraire utiliser la réflexion par effet de bord, autour de chaque matrice 16 et des transducteurs 10 correspondants, pour y générer des ondes stationnaires.

Selon une caractéristique importante de l'invention, on peut également utiliser le système d'antigivrage 4 pour procéder au dégivrage de la surface externe 2 de la structure d'aéronef 3, dans le cas d'un givrage trop fort pour se contenter du mode antigivrage. Dans ce cas, on passe en mode dégivrage en mettant avantageusement en oeuvre la technique du retournement temporel. Contrairement au mode antigivrage décrit précédemment, l'objectif est ici de localiser les points de formation de glace et de les traiter au fur et à mesure de leur apparition.

En référence à la figure 7, le principe du retournement temporel est fondé sur le caractère multimodal et dispersif des ondes ultrasonores. Il consiste à « écouter » les signaux issus d'une source S, de capter ces signaux à l'aide d'un transducteur piézoélectrique $T_k$ et de les stocker dans une mémoire interne. Ces signaux peuvent dans un second temps être inversés (i.e. dans le sens d'une chronologie inverse) et réémis après inversion. On constate que l'onde ainsi retournée et réémise emprunte le même chemin au retour qu'à l'aller et vient se refocaliser au point source S. Cela nécessite d'utiliser des transducteurs $T_k$ réversibles, i.e. pouvant fonctionner successivement en mode récepteur et en mode émetteur. Le retournement temporel est fondé sur l'unicité de la réponse en fonction du lieu d'émission. Par ailleurs, on choisit avantageusement de comprimer l'onde reçue avant de la réémettre, pour concentrer l'énergie sur ce point source S. Le retournement temporel peut ainsi être exploité pour réaliser la cartographie des signatures acoustiques d'une surface préalablement « insonifiée » :

Le fonctionnement du système 4 selon l'invention en mode dégivrage est donc comme suit :

- sur la ou chaque matrice 16 de mailles (i, j), un ou plusieurs transducteur(s) $T_1$ qui joue le rôle d'émetteur émet une onde ultrasonore,
- cette onde « croise » le chemin de la singularité S provoquée par une accumulation locale de glace sur la surface externe 2 à traiter de la structure 3,
- les autres transducteurs $T_2$ à $T_6$ de cette matrice 16, qui fonctionnent alors en mode récepteur, reçoivent un signal provenant de cette onde, et
- ce signal reçu est inversé et comprimé pour retourner à la singularité S, l'énergie ainsi refocalisée permettant de décoller efficacement la glace de la structure 3.

On notera à nouveau que le système 4 selon l'invention permet également de réduire la consommation d'énergie en mode dégivrage, en comparaison des systèmes de dégivrage existants.

**Revendications**

1. Système d'antigivrage (4) par des ondes ultrasonores d'une surface externe (2) d'une structure (3) susceptible d'être givrée, telle qu'une voilure ou une nacelle d'aéronef, ce système comprenant une pluralité de transducteurs piézoélectriques (10, $T_k$, $X_k$, $Y_k$) équipant la structure en regard de cette surface externe, **caractérisé en ce qu'**il comprend des moyens de balayage d'au moins une matrice (16) de mailles élémentaires (i, j) prédéfinie dans cette surface en relation avec un agencement régulier d'un groupe de ces transducteurs, ces moyens de balayage étant aptes à focaliser les ondes émises par tout ou partie des transducteurs du ou de chaque groupe sur ces mailles les unes à la suite des autres, par l'intermédiaire de moyens de sommation de signaux couplés à ces moyens de balayage et aptes à réaliser pour chaque maille une sommation des signaux issus des transducteurs émettant ces ondes.

**2.** Système d'antigivrage (4) selon la revendication 1, **caractérisé en ce que** ces moyens de sommation sont aptes à recalculer à chaque instant la longueur d'onde et la phase de chaque signal émis par chaque transducteur (10, $T_k$, $X_k$, $Y_k$) du ou de chaque groupe à l'intérieur de la ou de chaque matrice (16) associée, de sorte que ces moyens de balayage focalisent de manière synchronisée sur chaque maille (i, j) la somme des ondes émises avec une amplitude maximale pour l'onde résultante.

**3.** Système d'antigivrage (4) selon la revendication 1 ou 2, **caractérisé en ce que** lesdits transducteurs (10, $T_k$, $X_k$, $Y_k$) sont montés sur une face interne (11) de ladite structure (3) qui est opposée à ladite surface externe (2).

**4.** Système d'antigivrage (4) selon une des revendications précédentes, **caractérisé en ce que** le ou chaque groupe de transducteurs (10, $T_k$, $X_k$, $Y_k$) associé à la ou chaque matrice (16) de mailles (i, j) comprend deux séries (8 et 9) de transducteurs respectivement agencées en vis-à-vis et en regard de deux bords périphériques parallèles de ladite surface externe (2) qui sont extérieurs à la matrice correspondante, chacune desdites séries (8, 9) de transducteurs (10, $T_k$, $X_k$, $Y_k$) comprenant de préférence une pluralité de couples ($C_k$) de transducteurs régulièrement espacés dans une direction de la matrice (16) correspondante, l'un des deux transducteurs ($Y_k$) de chaque couple étant alors conçu pour remplacer l'autre transducteur ($X_k$) en cas de défaillance de ce dernier.

**5.** Système d'antigivrage (4) selon une des revendications précédentes, **caractérisé en ce que** chaque transducteur (10, $T_k$, $X_k$, $Y_k$) dudit ou de chaque groupe est alimenté par un générateur électrique (12) au moyen de câbles logés dans ladite structure (3), et est connecté à une mémoire (13) couplée à un calculateur conçu pour calculer les paramètres de l'onde à envoyer vers chaque maille (i, j), l'ensemble des transducteurs étant relié à un même dispositif de gestion électronique (14) apte à commander ces moyens de balayage selon des séquences de balayage déterminées.

**6.** Système d'antigivrage (4) selon une des revendications précédentes, **caractérisé en ce qu'**il comprend au moins un dispositif de mesure de la température (15) de ladite surface externe (2) qui est couplé audit dispositif de gestion (14), pour définir les ondes utilisées dans chaque séquence de balayage.

**7.** Système d'antigivrage (4) selon une des revendications précédentes, **caractérisé en ce qu'**il comprend en outre des moyens d'amortissement acoustique (17, 18) qui sont au moins aptes à éviter la propagation desdites ondes émises de l'une des matrices (16) aux autres matrices adjacentes.

**8.** Système d'antigivrage (4) selon la revendication 7, **caractérisé en ce que** lesdits moyens d'amortissement (17, 18) comprennent des bandes d'amortissement de séparation (17) entre les matrices (16) qui sont de préférence chacune à base d'un élastomère viscoélastique, tel que le « Deltane », et qui sont respectivement agencées en regard de frontières entre les matrices, entre une face interne (11) de ladite structure (3) opposée à ladite surface externe (2) et une plaque support (19) de préférence métallique, lesdits moyens d'amortissement (17, 18) comprenant en outre de préférence des bordures d'amortissement (18) qui sont de préférence chacune à base d'un élastomère viscoélastique, tel que le « Deltane », et qui sont agencées en regard d'une zone périphérique de ladite surface externe (2) entourant à la fois la ou chaque matrice (16) et les transducteurs (10, $T_k$, $X_k$, $Y_k$) associés, ces bordures d'amortissement étant aptes à éviter la réflexion par effet de bord desdites ondes émises dans chaque matrice.

**9.** Système d'antigivrage (4) selon une des revendications précédentes, **caractérisé en ce que** le ou chaque groupe de transducteurs (10, $T_k$, $X_k$, $Y_k$) comprend des transducteurs réversibles qui sont successivement aptes à émettre et à recevoir lesdites ondes, en particulier pour détecter par retournement temporel la présence de zones glacées (S) sur la ou chaque matrice (16), le système étant de préférence également apte à dégivrer successivement lesdites zones glacées (S) après détection de celles-ci par retournement temporel, au moins l'un des transducteurs (10, $T_k$, $X_k$, $Y_k$) fonctionnant en tant qu'émetteur et les autres en tant que récepteur, ce système comprenant des moyens de stockage des signaux émis couplés à des moyens de compression et d'inversion des signaux stockés, lesdits moyens de balayage étant aptes à refocaliser ces signaux inversés et comprimés vers lesdites zones glacées.

**10.** Système d'antigivrage (4) selon une des revendications précédentes, **caractérisé en ce que** chacun des transducteurs (10, $T_k$, $X_k$, $Y_k$) est un transducteur piézoélectrique multicouches à base d'un matériau céramique.

**11.** Système d'antigivrage (4) selon une des revendications précédentes, **caractérisé en ce qu'**il comprend un réseau formé d'une pluralité des matrices (16) comprenant chacune une multitude des mailles (i, j), ces dernières étant par exemple présentes selon un nombre compris entre 500 et 5000 dans chaque matrice.

**12.** Structure d'aéronef (3) susceptible d'être givrée sur sa surface externe (2), telle qu'une surface de voilure ou de nacelle, **caractérisée en ce qu'**elle intègre un système d'antigivrage (4) selon une des revendications précédentes, cette structure formant de préférence une aile d'avion où chaque groupe de transducteurs (10, $T_k$, $X_k$, $Y_k$) associé à la ou chaque matrice (16) comprend deux séries (8 et 9) de transducteurs respectivement agencées côtés extrados (6) et intrados (7) en regard de deux bords périphériques parallèles de ladite surface (2) qui sont extérieurs à cette matrice, les transducteurs de chaque série étant régulièrement espacés dans une direction longitudinale de la structure et étant couplés à deux collecteurs d'alimentation électrique respectivement extrados et intrados.

**13.** Procédé d'antigivrage par des ondes ultrasonores d'une surface externe (2) d'une structure (3) susceptible d'être givrée, telle qu'une voilure ou une nacelle d'aéronef, ce procédé utilisant une pluralité de transducteurs piézoélectriques (10, $T_k$, $X_k$, $Y_k$) équipant la structure de manière adjacente à cette surface, **caractérisé en ce qu'**il comprend essentiellement :

- une émission d'ondes progressives, dans au moins une matrice (16) de mailles élémentaires (i, j) prédéfinie dans cette surface externe en relation avec un agencement régulier d'un groupe de ces transducteurs, par tout ou partie de ces derniers,
- une sommation, pour chaque maille de cette matrice, de signaux issus des transducteurs émettant ces ondes et représentatifs de celles-ci, et
- au moins un balayage de cette matrice, pour focaliser les ondes progressives résultantes émises sur ces mailles les unes à la suite des autres,

**en ce que** l'on réalise de préférence chaque balayage de la ou chaque matrice (16) de manière synchronisée en recalculant à chaque instant la longueur d'onde et la phase desdits signaux pour maximiser l'énergie vibratoire sur chacune des mailles (i, j) avec une amplitude total maximale pour le signal résultant, correspondant de préférence à un déplacement généré sur ces mailles égal ou supérieur à 1 $\mu$m,
et **en ce que** l'on choisit de préférence les dimensions de la ou chaque matrice (16) et le nombre des transducteurs (10, $T_k$, $X_k$, $Y_k$) au sein de chaque groupe associé en fonction de la période de balayage maximale souhaitée.

**14.** Procédé d'antigivrage selon la revendication 13, **caractérisé en ce que** les transducteurs (10, $T_k$, $X_k$, $Y_k$) émettent des paquets d'ondes focalisés sur chaque maille (i, j) de la ou chaque matrice (16) à traiter, dont les fréquences sont comprises entre 100 kHz et 5 MHz.

**15.** Procédé d'antigivrage selon la revendication 13 ou 14, **caractérisé en ce que** l'on mesure la température de ladite surface externe (2) pour choisir les ondes de la séquence de balayage pour chaque transducteur (10, $T_k$, $X_k$, $Y_k$).

**16.** Procédé d'antigivrage selon une des revendications 13 à 15, **caractérisé en ce que** l'on définit une pluralité des matrices (16) sur ladite surface externe (2) qui comprennent chacune une multitude des mailles (i, j), par exemple présentes selon un nombre compris entre 500 et 5000 par matrice, et **en ce que** de préférence l'on amortit entre les matrices (16) deux à deux adjacentes les ondes émises dans l'une d'entre elles pour éviter leur propagation à la matrice adjacente.

**17.** Procédé d'antigivrage selon une des revendications 13 à 16, **caractérisé en ce que** l'on amortit les ondes émises dans chaque matrice (16) pour éviter la réflexion par effet de bord, autour de cette matrice et des transducteurs (10, $T_k$, $X_k$, $Y_k$) correspondants.

**18.** Procédé d'antigivrage selon une des revendications 13 à 16, **caractérisé en ce que** l'on utilise la réflexion par effet de bord, autour de chaque matrice (16) et des transducteurs correspondants (10, $T_k$, $X_k$, $Y_k$), pour générer des ondes stationnaires.

**19.** Procédé d'antigivrage selon une des revendications 13 à 18, **caractérisé en ce que** l'on prévoit des couples ($C_k$) de transducteurs ($X_k$, $Y_k$) régulièrement espacés dans une direction de la matrice (16) correspondante, l'un des deux transducteurs de chaque couple étant utilisé pour remplacer l'autre transducteur en cas de défaillance de ce dernier, et **en ce que** de préférence l'on réalise des tests avant de mettre en oeuvre l'antigivrage, consistant à :

- émettre un signal avec un transducteur émetteur à tester inclus dans un couple ($C_k$) de transducteurs ($X_k$, $Y_k$) associé à la ou à chaque matrice, tous les autres transducteurs du groupe correspondant étant utilisés en mode récepteur et, dans ce cas, à
- examiner si au moins l'un de ces transducteurs ($X_k$) en mode récepteur ne reçoit pas ce signal, de préférence en utilisant la technique de retournement temporel pour affiner la localisation de la source émettrice par les transducteurs en mode récepteur, et

- faire basculer la mise en oeuvre de l'antigivrage sur l'autre transducteur émetteur ($Y_k$) pour cause de défaillance du transducteur ($X_k$).

**20.** Procédé d'antigivrage selon une des revendications 13 à 19, **caractérisé en ce que** l'on met également en oeuvre un dégivrage de ladite surface externe (2) par la technique de retournement temporel, pour la ou chaque matrice (16) de mailles (i, j) :

- en faisant émettre une onde à au moins un transducteur ($T_1$) utilisé en mode émetteur associé à la ou chaque matrice, cette onde rencontrant une singularité provoquée par un point de formation de glace (S) sur cette matrice,
- en captant, par tout ou partie des autres transducteurs ($T_2$ à $T_6$) associés à cette même matrice et utilisés en mode récepteur, le signal représentatif de cette onde ayant rencontré cette singularité, et en stockant ce signal dans une mémoire interne, et
- en inversant et en comprimant ce signal pour refocaliser l'onde correspondant à ce signal inversé et comprimé vers ladite singularité, pour dégivrer successivement les points de glace au fur et à mesure de leur formation, suite à leur localisation.

**21.** Procédé d'antigivrage selon une des revendications 13 à 20, **caractérisé en ce que** chacun des transducteurs (10, $T_k$, $X_k$, $Y_k$) présente une épaisseur, mesurée dans le sens de l'épaisseur de la structure (3), qui est de l'ordre d'une demi-longueur d'onde ultrasonore.

**Claims**

**1.** Anti-icing system (4) using ultrasound waves for an external surface (2) of a structure (3) likely to be iced, such as a wing or an engine nacelle of an aircraft, this system comprising a plurality of piezoelectric transducers (10, $T_k$, $X_k$, $Y_k$) with which the structure is equipped facing this external surface, **characterized in that** it comprises means of scanning at least one matrix (16) of elementary meshes (i, j) predefined in this surface related to a regular arrangement of a group of these transducers, these scanning means being able to focus the waves emitted by all or some of the transducers of the or each group on these meshes one after the other, via signal summing means coupled to these scanning means and able to produce, for each mesh, a summation of the signals obtained from the transducers emitting these waves.

**2.** Anti-icing system (4) according to Claim 1, **characterized in that** these summing means are able to recalculate at each instant the wavelength and the phase of each signal emitted by each transducer (10, $T_k$, $X_k$, $Y_k$) of the or each group inside the or each associated matrix (16), so that these scanning means focus in a synchronized manner on each mesh (i, j) the sum of the waves emitted with a maximum amplitude for the resultant wave.

**3.** Anti-icing system (4) according to Claim 1 or 2, **characterized in that** said transducers (10, $T_k$, $X_k$, $Y_k$) are mounted on an internal face (11) of said structure (3) which is opposite said external surface (2).

**4.** Anti-icing system (4) according to one of the preceding claims, **characterized in that** the or each group of transducers (10, $T_k$, $X_k$, $Y_k$) associated with the or each matrix (16) of meshes (i, j) comprises two series (8 and 9) of transducers respectively arranged facing and opposite two parallel peripheral edges of said external surface (2) that are external to the corresponding matrix, each of said series (8, 9) of transducers (10, $T_k$, $X_k$, $Y_k$) preferably comprising a plurality of pairs ($C_k$) of transducers evenly spaced in a direction of the corresponding matrix (16), one of the two transducers ($Y_k$) of each pair being then designed to replace the other transducer ($X_k$) should the latter fail.

**5.** Anti-icing system (4) according to one of the preceding claims, **characterized in that** each transducer (10, $T_k$, $X_k$, $Y_k$) of said or each group is powered by an electric generator (12) by means of cables housed in said structure (3), and is connected to a memory (13) coupled to a computer designed to calculate the parameters of the wave to be sent to each mesh (i, j), all of the transducers being linked to one and the same electronic management device (14) able to control these scanning means according to determined scanning sequences.

**6.** Anti-icing system (4) according to one of the preceding claims, **characterized in that** it comprises at least one device (15) for measuring the temperature of said external surface (2) which is coupled to said management device (14), to define the waves used in each scanning sequence.

7. Anti-icing system (4) according to one of the preceding claims, **characterized in that** it also comprises acoustic damping means (17, 18) that are at least able to avoid the propagation of said waves emitted from one of the matrices (16) to the other adjacent matrices.

8. Anti-icing system (4) according to Claim 7, **characterized in that** said damping means (17, 18) comprise separation damping strips (17) between the matrices (16) which are preferably each based on a visco-elastic elastomer, such as "Deltane", and which are respectively arranged opposite boundaries between the matrices, between an internal face (11) of said structure (3) opposite said external surface (2) and a support plate (19), preferably metallic, said damping means (17, 18) also preferably comprising damping borders (18) which are preferably each based on a visco-elastic elastomer, such as "Deltane", and which are arranged opposite a peripheral area of said external surface (2) surrounding both the or each matrix (16) and associated transducers (10, $T_k$, $X_k$, $Y_k$), these damping borders being able to avoid the reflection by edge effect of said waves emitted in each matrix.

9. Anti-icing system (4) according to one of the preceding claims, **characterized in that** the or each group of transducers (10, $T_k$, $X_k$, $Y_k$) comprises reversible transducers which are successively able to emit and receive said waves, in particular for detecting by time turnaround the presence of iced areas (S) on the or each matrix (16), the system preferably being also able to successively de-ice said iced areas (S) after detection of the latter by time turnaround, at least one of the transducers (10, $T_k$, $X_k$, $Y_k$) operating as emitter and the others as receiver, this system comprising emitted signal storage means coupled to stored signal compression and reversal means, said scanning means being able to refocus these reversed and compressed signals toward said iced areas.

10. Anti-icing system (4) according to one of the preceding claims, **characterized in that** each of the transducers (10, $T_k$, $X_k$, $Y_k$) is a multilayer piezoelectric transducer based on a ceramic material.

11. Anti-icing system (4) according to one of the preceding claims, **characterized in that** it comprises a network formed by a plurality of matrices (16) each comprising a multitude of the meshes (i, j), the latter being, for example, present in a number between 500 and 5000 in each matrix.

12. Aircraft structure (3) likely to be iced on its external surface (2), such as a wing or engine nacelle surface, **characterized in that** it incorporates an anti-icing system (4) according to one of the preceding claims, this structure preferably forming an airplane wing where each group of transducers (10, $T_k$, $X_k$, $Y_k$) associated with the or each matrix (16) comprises two series (8 and 9) of transducers respectively arranged on the upper-surface (6) and lower-surface (7) sides opposite two parallel peripheral edges of said surface (2) which are external to this matrix, the transducers of each series being evenly spaced in a longitudinal direction of the structure and being coupled to two respectively upper-surface and lower-surface electrical power supply collectors.

13. Anti-icing method using ultrasound waves for an external surface (2) of a structure (3) likely to be iced, such as an aircraft wing or engine nacelle, this method using a plurality of piezoelectric transducers (10, $T_k$, $X_k$, $Y_k$) with which the structure is equipped adjacent to this surface, **characterized in that** it mainly comprises:

   - an emission of traveling waves, in at least one matrix (16) of elementary meshes (i, j) predefined in this external surface in relation to an even arrangement of a group of these transducers, by all or some of the latter,
   - a summation, for each mesh of this matrix, of signals obtained from the transducers emitting these waves and representative of the latter, and
   - at least one scan of this matrix, to focus the resultant traveling waves emitted these meshes one after the other,

   **in that** each scan of the or each matrix (16) is preferably performed in a synchronized manner by recalculating at each instant the wavelength and the phase of said signals to maximize the vibratory energy on each of the meshes (i, j) with a maximum total amplitude for the resultant signal, preferably corresponding to a displacement generated on these meshes equal to or greater than 1 $\mu$m,
   and **in that** the dimensions of the or each matrix (16) and the number of the transducers (10, $T_k$, $X_k$, $Y_k$) within each associated group are preferably chosen according to the desired maximum scanning period.

14. Anti-icing method according to Claim 13, **characterized in that** the transducers (10, $T_k$, $X_k$, $Y_k$) emit packets of waves focused on each mesh (i, j) of the or each matrix (16) to be treated, the frequencies of which are between 100 kHz and 5 MHz.

**15.** Anti-icing method according to Claim 13 or 14, **characterized in that** the temperature of said external surface (2) is measured to choose the waves of the scanning sequence for each transducer (10, $T_k$, $X_k$, $Y_k$).

**16.** Anti-icing method according to one of Claims 13 to 15, **characterized in that** a plurality of the matrices (16) is defined on said external surface (2) which each comprise a multitude of the meshes (i, j), for example present in a number between 500 and 5000 per matrix, and **in that**, between the adjacent pairs of matrices (16), the waves emitted in one of them are preferably damped to avoid their propagation to the adjacent matrix.

**17.** Anti-icing method according to one of Claims 13 to 16, **characterized in that** the waves emitted in each matrix (16) are damped to avoid the reflection by edge effect, around this matrix and the corresponding transducers (10, $T_k$, $X_k$, $Y_k$).

**18.** Anti-icing method according to one of Claims 13 to 16, **characterized in that** the reflection by edge effect, around each matrix (16) and the corresponding transducers (10, $T_k$, $X_k$, $Y_k$), is used to generate standing waves.

**19.** Anti-icing method according to one of Claims 13 to 18, **characterized in that** pairs ($C_k$) of transducers ($X_k$, $Y_k$) are provided, evenly spaced in a direction of the corresponding matrix (16), one of the two transducers of each pair being used to replace the other transducer should the latter fail, and **in that** tests are preferably carried out before implementing the anti-icing, consisting in:

- emitting a signal with an emitting transducer to be tested included in a pair ($C_k$) of transducers ($X_k$, $Y_k$) associated with the or each matrix, all the other transducers of the corresponding group being used in receiving mode and, in this case, in
- checking to see if at least one of these transducers ($X_k$) in receiving mode does not receive this signal, preferably by using the time turnaround technique to refine the location of the emitting source by the transducers in receiving mode, and
- having the implementation of the anti-icing switched over to the other emitting transducer ($Y_k$) because of failure of the transducer ($X_k$).

**20.** Anti-icing method according to one of Claims 13 to 19, **characterized in that** there is also implemented a de-icing of said external surface (2) by the time turnaround technique, for the or each matrix (16) of meshes (i, j):

- by having a wave emitted to at least one transducer ($T_1$) used in emitting mode associated with the or each matrix, this wave encountering a singularity provoked by an ice formation spot (S) on this matrix,
- by picking up, by all or some of the other transducers ($T_2$ to $T_6$) associated with this same matrix and used in receiving mode, the signal representative of this wave having encountered this singularity, and by storing this signal in an internal memory, and
- by reversing and by compressing this signal to refocus the wave corresponding to this reversed and compressed signal towards said singularity,
to successively de-ice the spots of ice as they form, after they have been located.

**21.** Anti-icing method according to one of Claims 13 to 20, **characterized in that** each of the transducers (10, $T_k$, $X_k$, $Y_k$) exhibits a thickness, measured in the direction of the thickness of the structure (3), which is of the order of a half-ultrasound wavelength.


**Patentansprüche**

**1.** Anti-Vereisungssystem (4) durch Ultraschallwellen von einer äußeren Oberfläche (2) einer Struktur (3), die im Stande ist zu vereisen, wie eine Tragfläche oder eine Triebwerksgondel eines Luftfahrzeugs, wobei das System eine Vielzahl von piezoelektrischen Wandlern (10, $T_k$, $X_k$, $Y_k$) umfasst, mit denen die Struktur im Vergleich zu der äußeren Oberfläche ausgestattet ist, **dadurch gekennzeichnet, dass** es Mittel zum Abtasten wenigstens einer Matrix (16) von Elementarzellen (i, j) umfasst, die in dieser Oberfläche im Vergleich zu einer regelmäßigen Anordnung einer Gruppe dieser Wandler vorbestimmt ist, wobei die Mittel zum Abtasten geeignet sind die durch alle oder einen Teil der Wandler emittierten Wellen einer oder jeder Gruppe auf diesen Zellen die einen in Folge der anderen, durch die Vermittlung von Mitteln zum Summieren von Signalen, die an die Mittel zum Abtasten gekoppelt sind und die geeignet sind für jede Zelle eine Summation der von den diese Wellen emittierenden Wandlern ausgegebenen Signale zu verwirklichen, zu fokussieren.

2. Anti-Vereisungssystem (4) nach Anspruch 1, **dadurch gekennzeichnet, dass** die Mittel zum Summieren geeignet sind die Länge der Welle und die Phase eines jeden von jedem Wandler (10, $T_k$, $X_k$, $Y_k$) von einer oder jeder Gruppe im Inneren einer oder jeder verbundenen Matrix (16) emittierten Signal zu jedem Augenblick nach zu berechnen, so dass die Mittel zum Abtasten auf synchrone Weise auf jeder Zelle (i, j) die Summe der emittierten Wellen mit einer maximalen Amplitude für die resultierende Welle, fokussieren.

3. Anti-Vereisungssystem (4) nach Anspruch 1 oder 2, **dadurch gekennzeichnet, dass** die Wandler (10, $T_k$, $X_k$, $Y_k$) auf einer der äußeren Oberfläche (2) gegenüberliegenden inneren Fläche (11) der Struktur (3) montiert sind.

4. Anti-Vereisungssystem (4) nach einem der vorhergehenden Ansprüche, **dadurch gekennzeichnet, dass** eine oder jede mit einer oder jeder Matrix (16) der Zellen (i, j) verbundene Gruppe von Wandlern (10, $T_k$, $X_k$, $Y_k$) zwei Reihen (8 und 9) von Wandlern umfasst, die jeweils gegenüber und im Vergleich zu den zwei parallelen Umfangsrändern der äußeren Oberfläche (2), die außerhalb der entsprechenden Matrix liegen, angeordnet sind, wobei eine jede der Reihen der Wandler (10, $T_k$, $X_k$, $Y_k$) vorzugsweise eine Vielzahl von Paaren ($C_k$) der Wandler umfasst, die regelmäßig ein einer Richtung der entsprechenden Matrix (16) beabstandet sind, wobei einer der beiden Wandler ($Y_k$) eines jeden Paares dann konzipiert ist, um den anderen Wandler ($X_k$) im Fall eines Versagens des Letzteren zu ersetzen.

5. Anti-Vereisungssystem (4) nach einem der vorhergehenden Ansprüche, **dadurch gekennzeichnet, dass** jeder Wandler (10, $T_k$, $X_k$, $Y_k$) einer oder jeder Gruppe von einem Stromgenerator (12) mittels in der Struktur (3) platzierten Kabeln versorgt wird und mit einem Speicher (13) verbunden ist, der mit einem Rechner gekoppelt ist, der konzipiert ist, um die Parameter der in Richtung jeder Zelle (i, j) zu schickenden Wellen zu berechnen, wobei die Gesamtheit der Wandler mit der gleichen elektronischen Leitungsvorrichtung (14) verbunden ist, die geeignet ist die Mittel zum Abtasten gemäß den ermittelten Abtastsequenzen zu steuern.

6. Anti-Vereisungssystem (4) nach einem der vorhergehenden Ansprüche, **dadurch gekennzeichnet, dass** es wenigstens eine Vorrichtung zur Temperaturmessung (15) der äußeren Oberfläche (2) umfasst, die mit der Leitungsvorrichtung (14) gekoppelt ist, um die in jeder Abtastsequenz verwendeten Wellen zu bestimmen.

7. Anti-Vereisungssystem (4) nach einem der vorhergehenden Ansprüche, **dadurch gekennzeichnet, dass** es ferner Mittel zur Schalldämpfung (17, 18) umfasst, die wenigstens geeignet sind die Ausbreitung der emittierten Wellen einer der Matrices (16) zu den anderen angrenzenden Matrices zu verhindern.

8. Anti-Vereisungssystem (4) nach Anspruch 7, **dadurch gekennzeichnet, dass** die Mittel zur Schalldämpfung (17, 18) Bänder zur Trennungsdämpfung (17) zwischen den Matrices (16) umfassen, die bevorzugt jeweils auf einem viskoelastischen Elastomer, wie "Deltane", basieren, und die jeweils im Vergleich zu den Grenzen zwischen den Matrices zwischen einer der äußeren Fläche (2) gegenüberliegenden inneren Fläche (11) der Struktur (3) und einer bevorzugt metallischen Trägerplatte (19) angeordnet sind, wobei die Mittel zur Dämpfung (17, 18) ferner bevorzugt Dampfungskanten (18) umfassen, die jeweils bevorzugt auf einem viskoelastischen Elastomer, wie "Deltane", basieren, und die im Vergleich zu dem Umfangsbereich der äußeren Oberfläche (2), die zugleich eine oder jede Matrix (16) und die damit verbundenen Wandler (10, $T_k$, $X_k$, $Y_k$) umgibt, angeordnet sind, wobei die Dämpfungskanten geeignet sind die Reflexion durch die Wirkung des Rands der emittierten Wellen in jeder Matrix zu vermeiden.

9. Anti-Vereisungssystem (4) nach einem der vorhergehenden Ansprüche, **dadurch gekennzeichnet, dass** die oder jede Gruppe der Wandler (10, $T_k$, $X_k$, $Y_k$) umkehrbare Wandler umfasst, die nacheinander geeignet sind die Wellen zu emittieren und sie zu empfangen, insbesondere, um durch zeitliche Umkehr die Anwesenheit von vereisten Bereichen (S) auf der oder jeder Matrix (16) zu erfassen, wobei das System bevorzugt ebenso geeignet ist nacheinander die vereisten Bereiche (S) nach deren Erfassung durch zeitliche Umkehr zu enteisen, wobei wenigstens einer der Wandler (10, $T_k$, $X_k$, $Y_k$) als Emitter und die anderen als Empfänger funktionieren, wobei dieses System Mittel zum Speichern der emittierten Signale umfasst, die mit Mitteln zur Kompression und Inversion der gespeicherten Signale gekoppelt sind, wobei die Mittel zum Abtasten geeignet sind die invertierten und komprimierten Signale gegen die vereisten Bereiche zu refokussieren.

10. Anti-Vereisungssystem (4) nach einem der vorhergehenden Ansprüche, **dadurch gekennzeichnet, dass** jeder der Wandler (10, $T_k$, $X_k$, $Y_k$) ein piezoelektrischer mehrschichtiger Wandler auf Basis eines keramischen Materials ist.

11. Anti-Vereisungssystem (4) nach einem der vorhergehenden Ansprüche, **dadurch gekennzeichnet, dass** es Netz umfasst, das aus einer Vielzahl von Matrices (16) gebildet wird, von denen jede eine Vielzahl von Zellen (i, j) umfasst, wobei letztere zum Beispiel in einer Anzahl zwischen 500 und 5000 in jeder Matrix vorliegen.

**12.** Struktur eines Luftfahrzeugs (3), die im Stande ist auf ihrer äußeren Oberfläche (2), wie einer Tragfläche oder einer Triebwerksgondel, zu vereisen, **dadurch gekennzeichnet, dass** ein Anti-Vereisungssystem (4) nach einem der vorhergehenden Ansprüche integriert ist, wobei die Struktur bevorzugt einen Flügel eines Flugzeugs bildet, bei dem jede Gruppe von mit einer oder jeder Matrix (16) verbundenen Wandlern (10, $T_k$, $X_k$, $Y_k$) zwei Reihen von Wandlern (8 und 9) umfasst, die jeweils mit der Saugseite (6) und der Druckseite (7) im Vergleich zu den parallelen beiden Umfangsrändern der Oberfläche (2), die außerhalb dieser Matrix liegen, angeordnet sind, wobei die Wandler jeder Reihe regelmäßig in der longitudinalen Richtung der Struktur beabstandet sind und mit beiden Kollektoren der Stromzufuhr jeweils an der Saugseite und der Druckseite verbunden sind.

**13.** Anti-Vereisungs-Verfahren durch Ultraschallwellen von einer äußeren Oberfläche (2) einer Struktur (3), die im Stande ist zu vereisen, wie eine Tragfläche oder eine Triebwerksgondel eines Luftfahrzeugs, wobei in dem Verfahren eine Vielzahl von piezoelektrischen Wandlern (10, $T_k$, $X_k$, $Y_k$) verwendet wird, mit denen die Struktur angrenzend an diese Oberfläche ausgestattet ist, **dadurch gekennzeichnet, dass** sie im Wesentlichen folgendes umfasst:

- eine Emission von fortschreitenden Wellen in wenigstens einer Matrix (16) von Elementarzellen (i, j), die in dieser äußeren Oberfläche im Vergleich zu der regulären Anordnung einer Gruppe dieser Wandler, mit allen oder einem Teil Letzterer, vorherbestimmt ist,
- eine Summation, für jede Zelle dieser Matrix, von ausgegebenen Signalen der Wandler, die diese Wellen und deren Repräsentanten emittieren, und
- wenigstens eine Abtastung dieser Matrix, um die fortschreitenden, resultierenden, emittierten Wellen auf diesen Zellen, die einen in Folge der anderen, zu fokussieren,
so dass bevorzugt jede Abtastung einer oder jeder Matrix (16) synchronisiert realisiert wird, indem zu jedem Augenblick die Länge der Welle und die Phase der Signale zur Maximierung der Vibrationsenergie auf jeder der Zellen (i, j) mit einer maximalen Gesamtamplitude für das resultierende Signal nach berechnet wird, was bevorzugt einer erzeugten Verschiebung auf den Zellen von gleich oder mehr als 1 $\mu$m entspricht, und dass bevorzugt die Abmessungen einer oder jeder Matrix (16) und die Anzahl der Wandler (10, $T_k$, $X_k$, $Y_k$) innerhalb jeder verbundenen Gruppe entsprechend der Periode der gewünschten maximalen Abtastung ausgewählt werden.

**14.** Anti-Vereisungs-Verfahren nach Anspruch 13, **dadurch gekennzeichnet, dass** die Wandler (10, $T_k$, $X_k$, $Y_k$) Bündel von auf jeder Zelle (i, j) einer oder jeder zu verarbeitenden Matrix (16) fokussierten Wellen emittieren, deren Frequenzen zwischen 100 kHz und 5 MHz liegen.

**15.** Anti-Vereisungs-Verfahren nach Anspruch 13 oder 14, **dadurch gekennzeichnet, dass** die Temperatur der äußeren Oberfläche (2) gemessen wird, um die Wellen der Abtastsequenz für jeden Wandler (10, $T_k$, $X_k$, $Y_k$) auszuwählen.

**16.** Anti-Vereisungs-Verfahren nach einem der Ansprüche 13 bis 15, **dadurch gekennzeichnet, dass** eine Vielzahl von Matrices (16) auf der äußeren Oberfläche (2) bestimmt wird, die jeweils eine Vielzahl von Zellen (i, j) umfassen, die zum Beispiel gemäß einer Anzahl zwischen 500 und 5000 durch die Matrix dargestellt werden, und dass bevorzugt zwischen zwei angrenzenden Martices (16) die emittierten Wellen in einer von ihnen zum Verhindern deren Ausbreitung auf die angrenzende Matrix, gedämpft werden.

**17.** Anti-Vereisungs-Verfahren nach einem der Ansprüche 13 bis 16, **dadurch gekennzeichnet, dass** die emittieren Wellen in jeder Matrix (16), zum Verhindern der Reflexion durch die Wirkung des Rands, um die Matrix und deren entsprechenden Wandler (10, $T_k$, $X_k$, $Y_k$) herum, gedämpft werden.

**18.** Anti-Vereisungs-Verfahren nach einem der Ansprüche 13 bis 16, **dadurch gekennzeichnet, dass** die Reflexion durch die Wirkung des Rands, um die Matrix und deren entsprechenden Wandler (10, $T_k$, $X_k$, $Y_k$) herum zum Erzeugen von stationären Wellen verwendet wird.

**19.** Anti-Vereisungs-Verfahren nach einem der Ansprüche 13 bis 18, **dadurch gekennzeichnet, dass** Paare ($C_k$) von Wandlern ($X_k$, $Y_k$) vorgesehen sind, die regelmäßig in einer Richtung der entsprechenden Matrix (16) beabstandet sind, wobei einer der beiden Wandler jedes Paares zum Ersetzen des anderen Wandlers im Fall des Versagens des Letzteren verwendet wird, und dass bevorzugt Tests vor der Inbetriebnahme des Anti-Vereisung durchgeführt werden, die in Folgendem bestehen:

- Emittieren eines Signals mit einem Emitter-Wandler, um alle in einem Paar ($C_k$) von mit einer oder jeder Matrix verbundenen Wandlern ($X_k$, $Y_k$) eingeschlossenen anderen Wandlern der entsprechenden Gruppe, die im Empfänger-Modus verwendet werden, zu testen, und in diesem Fall, um

- zu untersuchen, ob wenigstens einer dieser Wandler im Empfänger-Modus dieses Signal nicht empfängt, bevorzugt indem das Verfahren der zeitlichen Umkehr verwendet wird, um die Lokalisierung der Emitter-Quelle durch die Wandler im Empfänger-Modus zu verfeinern, und

- die Inbetriebnahme der Anti-Vereisung auf den anderen Emitter-Wandler ($Y_k$) wegen des Versagens des Wandlers ($X_k$) umzulegen.

20. Anti-Vereisungs-Verfahren nach einem der Ansprüche 13 bis 19, **dadurch gekennzeichnet, dass** ebenso ein Enteisen der äußeren Oberfläche (2) für eine oder jede Matrix (16) der Zellen (i, j) durch das Verfahren der zeitlichen Umkehr eingesetzt wird:

- indem eine Welle wenigstens eines im Emitter-Modus verwendeten Wandlers (T1), der mit einer oder jeder Matrix verbunden ist, emittiert wird, wobei diese Welle mit einer durch einen Punkt der Eisbildung (S) hervorgerufenen Eigenheit auf dieser Matrix zusammentrifft,

- indem durch alle oder einen Teil der anderen Wandler ($T_2$ bis $T_6$), die mit dergleichen Matrix verbunden sind und die im Empfänger-Modus verwendet werden, das repräsentative Signal dieser Welle, die mit der dieser Eigenheit zusammengetroffen ist, eingefangen wird, und indem dieses Signal in einem internen Speicher gespeichert wird, und

- indem dieses Signal invertiert und komprimiert wird, um die dem durch die Eigenheit invertieren und komprimierten Signal entsprechende Welle zu refokussieren,

um nacheinander die Eispunkte je nach deren Bildung, im Anschluss an deren Lokalisierung zu enteisen.

21. Anti-Vereisungs-Verfahren nach einem der Ansprüche 13 bis 20, **dadurch gekennzeichnet, dass** jeder der Wandler (10, $T_k$, $X_k$, $Y_k$) eine Höhe aufweist, die in der Richtung der Höhe der Struktur (3) gemessen wird, welche in der Größenordnung der halben Länge der Ultraschallwelle liegt.

## FIG.1

## FIG.2

## FIG.3

FIG.4

FIG.5

FIG.6

FIG.7

$T_1$ $T_2$ $T_3$

S

16

$T_4$ $T_5$ $T_6$

FIG.8

$C_1$ $C_2$ $C_3$

X1 Y1   X2 Y2   X3 Y3

8

9

16

X4 Y4   X5 Y5   X6 Y6

$C_4$ $C_5$ $C_6$

2

3

17

a

b

11

19

FIG.9

**EP 2 098 450 B1**

## RÉFÉRENCES CITÉES DANS LA DESCRIPTION

**Documents brevets cités dans la description**

- DE 102004060675 A
- WO 2007095935 A
- DE 19826168